# EUROPEAN PATENT APPLICATION

(11) **EP 4 018 813 A1**
(43) Date of publication of application: **29.06.2022**
(21) Application number: 21216429.7
(22) Date of filing: 21.12.2021
(51) Int. Cl.: A01F 15/07, B65B 11/00, B65B 41/00, B65H 19/00, B66C 1/00

(54) **METHOD AND SYSTEM FOR TRANSPORT AND PLACEMENT OF FOIL ROLLS ON A FOIL WRAPPING MACHINE**

(30) Priority: 22.12.2020 DK PA202001447
(71) Applicant: Pomi Industri ApS, 9610 Nørager (DK); Mkjeldal, 7182 Bredsten (DK); Yde Kirk, Jens, 7730 Hanstholm (DK)
(72) Inventor: Mikkelsen, Poul, 9610 Nørager (DK); Yde Kirk, Jens, 7730 Hanstholm (DK); Kjeldal, Mogens, 7182 Bredsten (DK)
(74) Representative: Andreasen, Søren Laursen Vasegaard

(57) **Abstract**

A system for transporting and placing foil rolls (4) on a foil wrapping machine is disclosed. The system is configured for use where a number of foil rolls (4) are arranged, preferably with a vertical orientation, on a pallet, and where the foil wrapping machine is pulled by a vehicle (6), preferably a tractor (6) and that the system comprises:
- a main frame (1),
- a pallet frame (2) preferably with pallet forks, for receiving a pallet with foil rolls (4) placed thereon and with a perpendicularly upright frame at the rear of the pallet forks,
- a quick coupler mounted on the main frame, preferably an A-frame (20) rear-mounted or front-mounted on a vehicle, which is either the vehicle towing the foil wrapping machine or a separate vehicle,
- a crane for handling the foil rolls, which crane has a crane arm (5) with a rest position and an engaging position,
- a holding or gripping device (11, 14) mounted on the crane arm (5) and which in the engaging position of the crane arm is in contact with a foil roll (4) on the pallet.

The pallet frame (2) is rotatably mounted on the main frame (1) so that the pallet frame can be tilted backwards during transport and prevent the pallet or rolls from falling off. The holding or gripping device (11, 14) is arranged for holding and releasing the foil roll (4), and that the holding or gripping device is optionally arranged for rotation and/or displacement for placing the foil roll in the foil roll holder of the foil wrapping machine.

## Description

### Field of the invention

The present invention relates to a method for transport and placement of foil rolls on a foil wrapping machine, preferably intended for wrapping agricultural crops, wherein a number of foil rolls are arranged, preferably with a vertical orientation, on a pallet, and where the foil wrapping machine is pulled by a vehicle, preferably a tractor.

The invention further relates to a system for transport and placement of foil rolls on a foil wrapping machine, preferably intended for wrapping agricultural crops. The system is based on use in situations, in which a number of foil rolls are arranged, preferably with a vertical orientation, on a pallet, and where the foil wrapping machine is pulled by a vehicle, preferably a tractor.

### Background of the invention

Stretch foil or wrap foil is used to a large extent in agriculture not only in Denmark but in most of the world. Wrapped bales are everywhere, the so-called "food packages" - they are typically wrapped in white or green plastic. In addition, wrapped straw stacks are seen where two or more straw bales are placed on top of and next to each other in up to five layers.

Agriculture and agricultural contractors use the foil rolls in practice. First, the foil rolls are delivered to the farm or agricultural contractor from the supplier, then the rolls must be unpacked from boxes or another type of wrapping and be placed on the shelves or racks of the wrapping machine before being driven out into the field.

This movement and placement of foil rolls is done manually by one or two people. Every time rolls have to be changed in the field on the wrapping machine, the only option is manual handling, for now.

The weight of the foil rolls is the largest work environment challenge, as each roll typically weighs 25-30 kg. Occupational health and safety legislation stipulates that companies are not permitted to allow employees to lift more than a maximum of 25 kg placed close to the body. If this limit of the legislation is exceeded, the persons who handle the foil rolls are in risk of permanent damage, as the handling of the rolls during placement on the wrapping machines often involves very inconvenient working postures.

Changing foil rolls is not something the operators are looking forward to do, but they currently have no options other than grabbing the foil rolls and placing them on the wrapping machine unless an assistance is available. There is an expectation that operators would find it easy to accept an easier method.

Rolls weighing over 30 kg are not at all motivating for the operators. If a simple and easy-to-use auxiliary equipment is available, many will be very interested in it.

In order to comply with the legislation, two people are required when changing foil rolls, which is not realistic as it will significantly increase the cost of packaging. Thus, in practice, changing rolls is often done by a single person only, even if the method does not meet the working environment regulations.

There is currently no knowledge of any methods or devices that solve the problem of handling foil rolls in connection with wrapping agricultural crops.

US2008121119A1 and CA2620307 disclose a solution, where a crane is placed on a baler. A simple grab claw is mounted at the distal end of the crane.

DE 20305207 discloses a gripping pliers.

US2020015426A1 discloses a system intended for transporting foil rolls in order to place the foil rolls in a foil wrapping machine. US2020015426A1 does not show a system comprising a main frame and a pallet frame and where the two frames are rotatable relative to each other. US2020015426A1 does not show a crane for handling the foil rolls. This system is not designed for being used in a situation, in which a number of foil rolls are arranged, preferably with a vertical orientation, on a pallet, and where the foil wrapping machine is pulled by a vehicle, preferably a tractor.

In the industry, in which a large amount of foil rolls is used, the conditions are somewhat different. In the industry foil rolls are used indoors. The foil rolls are larger and heavier, and solutions have been developed to handle these types of foil rolls. The solutions may consist of mechanical systems that can be hand-drawn or mounted on a truck or a similar vehicle.

The manufacturers of foil rolls for agricultural purposes are limited by the maximum allowable size of the rolls they currently produce because no foil rolls are allowed to be heavier than 30 kg in order to enable manual handling of the foil rolls.

If it was allowed to handle larger and heavier foil rolls, the manufacturers would produce larger and heavier rolls because it would make both production, transport and handling much more efficient. This would probably make it possible to reduce the production cost and thus the price per meter of foil.

In the future, several brands of foil rolls will be produced from recyclable plastic foil. One of the methods to keep costs down and make the product attractive is to produce heavier rolls. Hereby it is possible to provide a more efficient production and reduce the costs.

If one has to safely handle the foil rolls that are on the marked today and has a weight of 25-30 kg and at the same time be able to handle the future heavier rolls, it requires the development of an efficient, flexible and safe method and a system for handling the rolls with minimal manual handling.

Such a method and such a system which can solve the above-mentioned problem of handling foil rolls is, however, not yet available on the market even though there is a very large potential.

The incentives to make investment in the invention includes firstly a consideration for occupational safety, as the risk of occupational accidents is reduced to a large extent when the operator no longer has to make undesired and uncomfortable heavy lifts when changing foil rolls. Secondly, the invention makes it possible for a single person to change foil rolls. Accordingly, the need for an assisting person during replacement of foil rolls is eliminated. The financial savings are quite significant when considering that foil rolls are typically changed/replaced twice every hour. Thirdly, it is not required to deliver the rolls boxed up in cardboard boxes which subsequently have to go through a recycling process.

Although solutions for industrial use are available, there are no immediate solutions that solve the challenge of simultaneously transporting foil rolls to the workplace, nor the challenge of developing a system being so flexible that it can be used for all the different types of wrapping machines available.

There are wrapping machines which are only designed for wrapping one or more bales extending along a long row and there are other wrapping machines which only pack a single bale at a time. There are also a significant number of wrappers that are built together with a round baler or a square baler.

### Object of the invention

The object of this invention is to provide a method and a system for handling foil rolls in a safe and sound manner, which complies with the legislation, in connection with transport and replacement of foil rolls on wrapping machines. It is an object to provide a method and a system, by which it is possible to replace rolls safely by a single person.

It is also an object to provide a method and a system that is suitable for being used for transport and placement of foil rolls, without manual handling (lifting), on foil wrapping machines intended for wrapping, preferably hay, straw and other crops.

### Summary of the invention

The object of the present invention can be achieved by a method as defined in claim 1 and by a system as defined in claim 2. Preferred embodiments are defined in the dependent subclaims, explained in the following description and illustrated in the accompanying drawings.

This object is achieved with a method of the type mentioned in the preamble of claim 1, wherein the method comprises the following steps:
- placing the pallet on a structure forming part of a system that is rear-mounted or front-mounted on a vehicle, which vehicle is either the vehicle towing the foil wrapping machine or a separate vehicle, wherein the system comprises a crane for handling the foil rolls, which crane may be mounted on the vehicle or the foil wrapping machine,
- transporting the foil rolls to a place of use, preferably a field;
- lowering the system at the end of the field or carrying the during work and lowering the system each time foil rolls need to be replaced in the foil wrapping machine,
- when replacing a foil roll, any empty foil roll cores are removed from the foil roll holder of the foil wrapping machine to enable the placement of a new foil roll in the foil roll holder,
- activating the crane from a rest position to an engaging position for placing a holding device or a gripping device mounted on a crane arm in contact with a foil roll on the pallet,
- activating the holding device or the gripping device for holding the foil roll,
- activating the crane arm to bring the foil roll held therein into position for placement in the foil wrapping machine,
- placing the foil roll in the foil roll holder in the foil wrapping machine either by rotation of the holding device of the gripping device or by vertical displacement depending on the orientation of the foil roll holder relative to the foil roll orientation on the pallet,
- releasing the holding device or the gripping device from the foil roll, and
- returning the crane arm to the rest position, after which the above-mentioned method steps can be repeated during the next foil roll replacement, wherein the next foil roll is transferred from the pallet to the foil roll holder.

In one embodiment, the method comprises the step of placing the foil roll in the foil roll holder in the foil wrapping machine either by rotation or by vertical displacement of the holding device of the gripping device in dependency on the orientation of the foil roll holder relative to the foil roll orientation on the pallet.

In one embodiment, the method comprises the step of placing the pallet on pallet forks forming part of the system mounted rear or front of the vehicle.

The system according to the invention is a system for transporting and placing foil rolls on a foil wrapping machine, preferably intended for wrapping agricultural crops, wherein the system is configured for use where a number of foil rolls are arranged, preferably with a vertical orientation, on a pallet, and where the foil wrapping machine is pulled by a vehicle, preferably a tractor and that the system comprises
- a main frame,
- a pallet frame preferably with pallet forks, for receiving a pallet with foil rolls placed thereon and with a perpendicularly upright frame at the rear of the pallet forks,
- a quick coupler mounted on the main frame, preferably an A-frame rear-mounted or front-mounted on a vehicle, which is either the vehicle towing the foil wrapping machine or a separate vehicle,
- a crane for handling the foil rolls, which crane has a crane arm with a rest position and an engaging position,
- a holding or gripping device mounted on the crane arm and which in the engaging position of the crane arm is in contact with a foil roll on the pallet,
- and that the pallet frame is rotatably mounted on the main frame so that the pallet frame can be tilted backwards during transport and prevent the pallet or rolls from falling off,
- and that the holding or gripping device is arranged for holding and releasing the foil roll, and that the holding or gripping device is optionally arranged for rotation and/or displacement for placing the foil roll in the foil roll holder of the foil wrapping machine.

In one embodiment, the system comprises a pallet frame with pallet forks, for receiving a pallet with foil rolls placed thereon.

In one embodiment, the system comprises a pallet frame preferably provided with pallet forks, for receiving a pallet with foil rolls placed thereon and with a perpendicularly upright frame that is arranged and configured to be tilted.

It may be an advantage that upright frame that is arranged and configured to be tilted at the rear of the pallet forks.

In one embodiment, the crane is a traverse crane.

Invention solves the problem of lifting foil rolls onto agricultural wrapping machines. Without such system for lifting foil rolls, the working environment rules cannot be complied with unless two persons are present every time rolls have to be replaced. It will make the work more difficult and expensive.

By using the invention, a single person can, in a safe manner, replace foil rolls even if the weight exceeds the weight of prior art foil rolls. Accordingly, it is possible to save both time and costs. The new method and the new system will make it more attractive to use recycled plastic in rolls of larger weight as it saves time and costs in all stages.

The invention not only saves time. The invention also reduces the risk of wear, tear on the body and occupational injuries.

When applying the system and method according to the invention, an entire pallet of foil rolls is transported to the workplace. When replacing rolls is required, the replacement is carried out by placing the front-mounted system, which is equipped with a quick coupling, in the field. Moreover, the machine in which replacement of foil rolls is required, is driven to the system which is equipped with a small crane that lifts the rolls into place without any required manual work with lifting rolls.

Using a quick coupler has the effect that it takes less than a minute to lower the system and arrange the wrapping machine next to it in order to replace foil rolls. In one embodiment, the system is mounted with pallet forks so that the system is able to grip and lift an entire pallet with foil rolls and transport them out to the workplace. During transport, the pallet frame is tilted backwards in the direction of travel to prevent the rolls from tipping forward and at the same time they are easier to catch with the gripper arm.

In one embodiment, instead of pallet forks, the system is provided with a firm bottom.

In one embodiment, the pallet is positioned by using a loader.

The system is intended for being mounted on a vehicle. The system can be mounted either at the front or at the rear end of the vehicle. The crane can be used independently. The crane may be mounted on the wrapping machine itself.

The crane can optionally be mounted on the vehicle or the foil wrapping machine. Hereby, the crane can may form an integral part or a separate part of the system.

The pallet forks or the bottom on which the pallet is placed can be adjusted in order to slope backwards, partly to ease engagement of the gripper arm onto the rolls and partly to ensure that the rolls do not fall out during transport and during handling.

At the top, the system is equipped with a crane, on which a gripper arm can be mounted. The gripper arm can be operated either manually, with a vacuum or with an electric actuator. Alternatively, a pipe lock can be mounted for vertical lifting of foil rolls for vertical placement on wrapping machines. The gripping arm can be used for both vertical and horizontal placement of foil rolls. The gripping arms are typically constructed of thin and light steel plates that are curved so that they can grip around the outer circumference of a foil roll.

Accordingly, the gripping arm can comprise two crescent-shaped plates provided with a closing mechanism that can be manual or activated with an electric actuator or vacuum.

Movements of the crane can be controlled by means of one or more electric actuators (preferably electric actuators) configured to be activated by means of a control handle. As an energy source, a battery is located at the front end of the system. Alternatively, an engine can be placed i the system to operate an oil pump or generator.

Foil rolls delivered to the farm or agricultural contractors are typically placed on pallets. Accordingly, pallet forks are mounted at the bottom of the system in such a manner that the system is able to lift a hole pallet with foil rolls and transport them out to the workplace.

In another embodiment, the bottom consists of a steel plate. In one embodiment, the pallet is a plastic pallet being placed on the bottom by means of loader.

At the workplace, it is possible choosing either to:
a) arrange the system at the end of the field and drive to the system every time replacement of foil rolls is required or
b) to carry the system in such a manner that the system is located in front of the tractor during work and put down the system down every time replacement of foil rolls is required.

Using a quick coupler (e.g. an A-frame) between tractor and system makes it possible to put down the system and park the wrapping machine for replacing foil rolls in a position next to it in less than a minute.

The system can also be placed in the rear end of a loading unit being used to position bales on a wrapping machine that wraps straw, hay or silage in one or more layers and in long sausage-shaped structures.

The system is operated by means of a control handle which is operated by one hand in such a manner that the operator stays behind the foil roll for safety reasons.

According to a further aspect of the invention, the holding device or the gripping device comprises a gripping arm comprising two crescent-shaped plates and is provided with a closing mechanism which is manually activated or activated by an electric actuator or vacuum.

According to a further aspect of the invention, the holding device or the gripping device comprises a pipe lock comprising two obliquely cut pipe halves, wherein an actuator is mounted inside the pipe.

According to a further aspect of the invention, the holding device or the gripping device comprises a pipe lock comprising two obliquely cut pipe halves, wherein an actuator is mounted inside the pipe.

According to a further aspect of the invention, the two pipe halves of the pipe lock are configured to be adapted to different diameters of cores in the foil rolls, wherein the pipe lock comprises replaceable pipe halves.

According to a further aspect of the invention, a lifting arm which connects the holding device or the gripping device to the crane arm extends between the crane arm and the holding device or the gripping device.

In one embodiment, a lifting arm that connects the holding device or the gripping device to the crane arm is provided between the crane arm and the holding device or gripping device.

According to a further aspect of the invention, a control handle is placed on the lifting arm in which all functions are controlled. It is an advantage that all functions can be controlled by using a control handle is placed on the lifting arm.

According to a further aspect of the invention, a drawbar having a slot is mounted between a pallet frame and a hydraulic piston mounted on the quick coupler of the vehicle, preferably an A-frame of a tractor.

According to a further aspect of the invention, the crane is mounted separately from the pallet forks and the pallet frame and is mounted directly on the foil wrapping machine.

In one embodiment, the crane is mounted on a structure that is arranged in a non-zero distance from the pallet forks and from the pallet frame. In one embodiment, the crane is mounted on the foil wrapping machine.

In a special embodiment, the system according to the invention comprises a front-mounted system provided with pallet forks in a pallet frame in order to allow the system to lift and transport an entire pallet with foil rolls at a time.

The foil rolls are typically delivered from the supplier on pallets and "reloading" to the system takes place without any kind of manual lifting of foil rolls. The foil rolls are typically vertically positioned on the transport pallet and wrapped with wrap foil.

The pallet frame can be rotated so that the foil rolls tilt backwards in relation to the direction of travel in order to prevent the foil rolls 4 from tipping over during handling and falling off during transport.

A crane with several mutually movable crane arms and with one or two turning devices is mounted at the top of the system. The turning devices are configured to be activated either manually or by means of one or more components, preferably actuators supplied with energy from an accumulator which is located on the system. In one embodiment, the accumulator is an integrated part of the system.

In one embodiment, the crane is provided with one or more lifting devices and may be provided with a crane extension arm on the outermost crane arm.

In on embodiment, the crane comprises a crane arm extension including at least one crane extension arm operable to assume different extension positions.

In one embodiment, on one side at the front of a main frame, the crane has its innermost pivot point which is provided with a lifting device.

In one embodiment, the crane functions as a traverse crane. In one embodiment, the crane can is a traverse crane.

In one embodiment, the holding device or the gripping device is a gripping arm. The gripping arm may be either mechanically, pneumatic or be controlled by an activator. The foil roll is rotated from horizontal to vertical either by means of an actuator or manually.

In one embodiment, the holding device or the gripping device for vertical lifting is formed as a pipe lock which can be lowered into the core of the roll. The pipe lock can be adapted to roll cores of different diameters by means of adjustable pipe sections.

### Description of the Drawings

The invention will become more fully understood from the detailed description given herein below. The accompanying drawings are given by way of illustration only, and thus, they are not limitative of the present invention. In the accompanying drawings:
- Fig. 1: shows a side view of a system according to the invention;
- Fig. 2: shows a partial top view of a system according to the invention;
- Fig. 3A: shows a partial side view of the system according to the invention;
- Fig. 3B: shows a partial side view of the system according to the invention;
- Fig. 4: shows an enlarged partial view of crane shown in Fig. 3A;
- Fig. 5: shows an enlarged partial view of a pipe lock which forms part of a system according to the invention,
- Fig. 6: shows a partial front view of the system according to the invention and
- Fig. 7: shows a partial top view of the system according to the invention.

### Detailed description of the invention

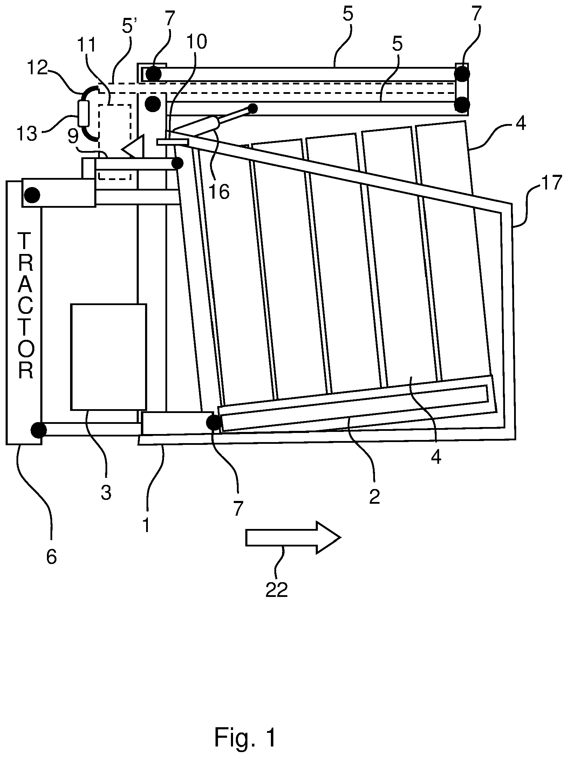

In the description of the figures, identical or corresponding elements will be denoted by the same reference numeral in the various figures. Thus, an explanation of all the details in connection with each individual figure/embodiment will not be given. Referring now in detail to the drawings for the purpose of illustrating preferred embodiments of the present invention, a system according to the present invention is illustrated in Fig. 1.

In Fig. 1 it can be seen that a system has been dropped off and is placed on the main frame 1 that rests on a surface. Fig. 1 shows an embodiment, in which the pallet frame 2 that consists of the pallet forks and the upright and rotatably frame extending perpendicular to the pallet forks. The pallet frame 2 has been rotated about the lower left point 7, so that the rolls 4 tilt forward towards the tractor at an angle of 20-30 degrees with respect to the vertical direction. This angle prevents the foil rolls 4 from falling off during transport and makes it easier to mount the gripper arm on the foil rolls 4.

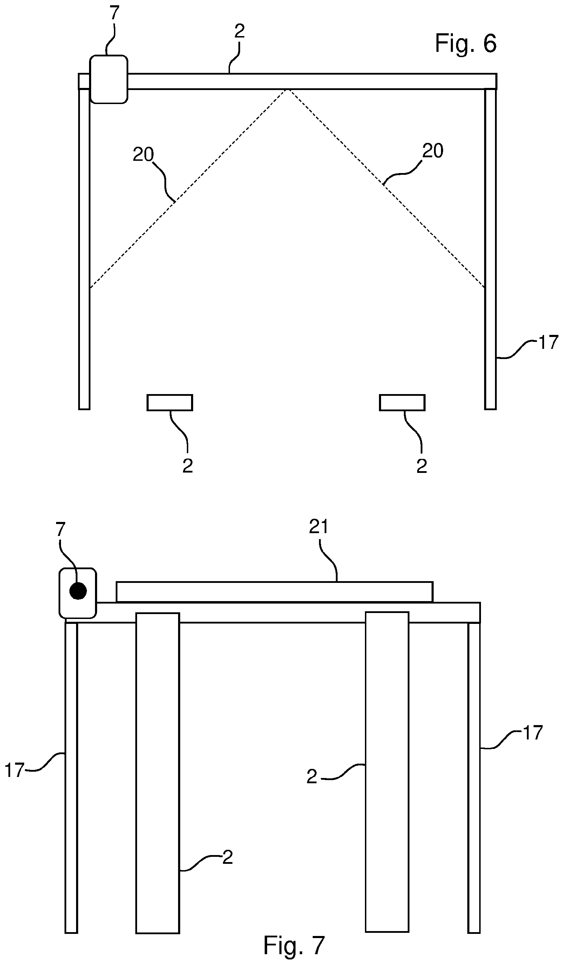

During transport, the system is connected to the tractor 6 via an A-frame 20 (see Fig. 6) which can be adjusted at the top by means of a hydraulic top rod. In one embodiment, the hydraulic top rod is used for tilting the pallet frame 2 backwards. The activation is accomplished by applying the drawbar 9 to pull the upper part of the pallet frame 2 towards the main frame 1 when the hydraulic top rod is activated in such a manner that the piston is moved further out of the cylinder 16. A lock pin locks the frame when it is in the desired position. When replacing pallets, the pallet frame 2 must return to the starting position. This is done by letting the hydraulic top rod pull the drawbar 9 all the way back so that the pallet is loose enough for it to be released by means of an actuator. Then the piston on the top rod is pulled back into the cylinder 16 and the pallet frame 2 returns to the starting position by gravity.

In another embodiment, the inclination of the pallet frame 2 is adjusted by tilting the main frame 1. In this embodiment, the pallet frame 1 is connected to the top frame of the pallet frame by a chain. The main frame 1 is tilted by raising and lowering the system.

The crane 5 has two length adjustable arms provided with two pivots 7. The crane comprises an crane extension arm 5'. The crane 5 has a total reach of approximately 2 m from the innermost pivot point of the crane 5 out to the gripper arm 11. During transport, the arms can be positioned so that the gripper arm 11 can be placed between the tractor and the system on the left side (with respect to the direction of travel indicated by an arrow 22). When the crane has been set at the current height, the special embodiment "traverse crane" can be used.

The gripping arm 11 consists of two crescent-shaped halves which enclose the foil roll 4 by 180-200 degrees. The two crescent-shaped halves can be vulcanized on the inside both for increasing durability and grip. The two crescent-shaped halves are connected by a hinge and are activated manually, with a vacuum or by means of an actuator. The use of an actuator provides the greatest safety, as an actuator can only be moved when power is supplied, which requires an active action.

The pipe lock 14 is intended for being used as an alternative to the gripper arm 11. The pipe lock 14 is suspended in the same way as the gripper arm 11.

When using the pipe lock 14 the pipe lock 14 is placed in the current roll 4. When the pipe lock 14 is placed in a roll 4, it is locked by means of the control handle. The actual locking is accomplished via an actuator 21. When using the actuator 21, the pipe lock 14 can only be activated by supplying power to the actuator 21, which is important for safety. Once the pipe lock 14 is in place and activated, the roll 4 can be lifted. It can be lifted directly into place on wrapping machines, in those cases in which the rolls are vertically positioned. When the roll 4 is suspended in a wire 19, it allows for an easy adjustment on the wrapping machine.

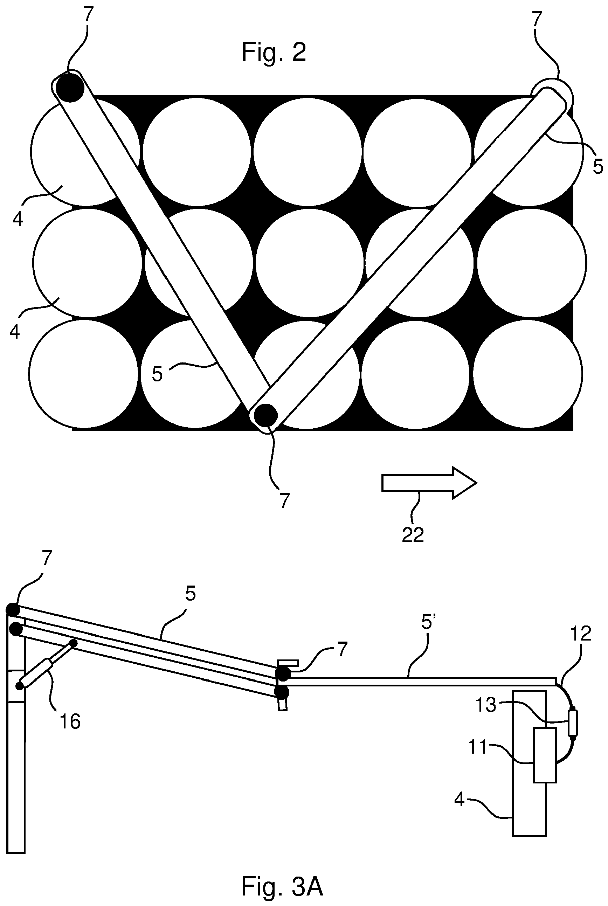

In Fig. 2 it is shown that the main pivot point of the crane is located on the right side (with respect to the direction of travel 22). By adjusting the mutual lengths of the two arms 5, the crane can be adapted to many different combinations of ranges. The crane arm 5 can be positioned so that the foil rolls 4 are protected during transport.

In Fig. 3A it can be seen that the inner pivot arm is provided with a parallel guide so that the outermost pivot point is kept as vertical as possible, in order to keep the pivoting force as small as possible. The crane has only one actuator 16 for lifting and lowering the two crane arms 5 with the outermost gripper arm 11. The crane comprises a crane extension arm 5'.

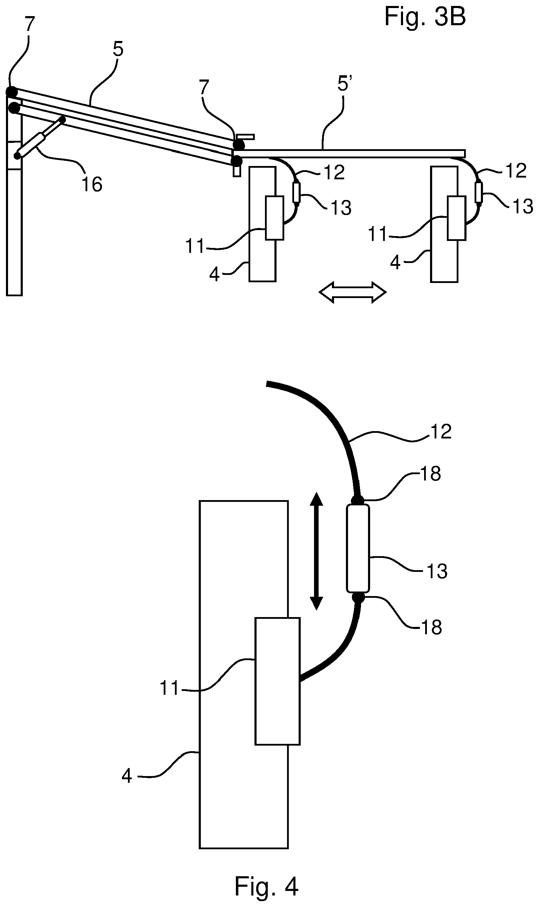

In Fig. 3B, the outer crane joint is provided with a slot in the bottom of the extension arm 5'. Hereby, the extension arm 5' functions as a traverse crane where the gripper arm 11 can be moved back and forth along the length of the extension arm 5' as indicated with the arrow.

When lifting a foil roll 4, the operator takes the gripper arm 12 and places it in the middle of the foil roll 4. Hereafter the actuator, vacuum or a manual lock is activated and the foil roll 4 is locked to the gripper arm 11 which is hanging in the lifting arm 12. The gripping arm is made of very thin and light steel plates and the lifting arm 12 is made of a light material so that the total weight of the lifting arm 12 and gripping arm 11 is made as light as possible and is designed in such a manner that the operator can easily bring it into engagement with the foil roll with a single hand.

Fig. 4 shows a detail view of the lifting arm 11 shown in Fig. 3A and in Fig. 3B. The steering is carried out by means of a control handle 13 arranged on the lifting arm 12. The control handle 13 can be moved slightly vertically in relative to the lifting arm 12. When lifting the control handle 13, the foil roll 4 is lifted up due to the activation of the activator. To lower the arm, the control handle 13 has to be moved downwards. The crane turns when pulling the control handle 13 to one side or the other (same principle as power steering). Several finger-operated rotary switches may be mounted on the control handle 13, depending on the embodiment (controlled manually, by an actuator or by means of vacuum).

The steering mechanism is arranged and constructed to ensure that the operator keeps behind the foil roll 4 and guides it in place. This configuration is selected for reasons of safety and convenience. The electrical connection to the activators of the gripper arm 11 and the lifting arm 12 is part of the "lifting wire" itself.

When the gripping arm 11 is engagement with the foil roll 4 and the foil roll 4 needs to be positioned horizontally in the wrapping machine, the gripping arm 11 is rotated manually or by means of an actuator. Now the foil roll 4 can, after it has been turned around and lifted the correct vertical position by means of the crane, be placed on the wrapping machine with a single hand on the control handle 13.

More specifically, the following functions of the control handle 13 can be specified:
1. When pulling the control up handle 13 the arm and the foil roll 4 are lifted.
2. When pulling the control handle 13 down, the arm and the foil roll 4 are lowered.
3. When pulling the control handle 13 horizontally in a direction away from the foil roll 4, the foil roll 4 moves in the same direction until the "arms" are in their end configuration.
4. When pushing the control handle 13 horizontally towards the foil roll 4, the foil roll 4 moves away from the operator until the "arms" are pushed completely together.
5. The gripper arm 11 is activated by means of the control handle 13.
6. Activation of rotation of the foil roll 4 is carried out manually.
7. The crane arms are rotated when the operator rotates the crane arms by using the hand.
8. The spring 18 in the top and bottom of the control handle 13 causes that when the control handle 13 is moved vertically up or down, the large activator 16 on the crane is activated.
9. Wires can be avoided and wireless transfer to the control box is enabled. The control box may be positioned at an accumulator that may be an integrated part of the system.

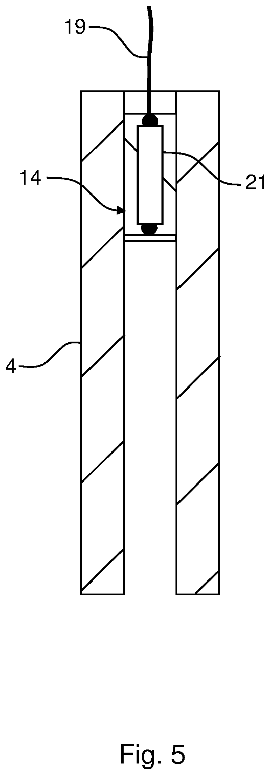

Fig. 5 shows the pipe lock 14 in a configuration, in which it has been inserted into the center of the foil roll 4 for vertical lifting and vertical placement of the foil roll 4. The pipe lock 14 comprises two pipe halves which are cut obliquely relative to each other. The pipe lock 14 comprises an actuator 21 arranged inside the pipe. When the actuator 21 pushes the two pipe halves towards each other, a radial force will press towards the inner wall of the inner pipe of the foil roll 4. Accordingly, the pipe lock 14 will be fixed to the inner pipe of the foil roll 4. If the upper pipe half of the pipe lock 14 extends out through the inner pipe of the foil roll 4, it is possible to maintain the pipe lock 14 in this position until the foil lock 14 is activated. There is very little resistance in the wire, just enough to retract the pipe lock 14 when it is released.

Fig. 6 shows a front view of the system (seen in front of the system and a tractor). Brackets for the crane are mounted on the right side. The crane is rotated manually. The system comprises a top frame front and closed or partly closed side panels 17.

Preferably, the bottom comprises only two pallet forks which are used to lift a pallet with foil rolls 4. When the system tilts backwards during transport, the pallet or foil rolls 4 are prevented from falling off. An inclination (tilt angle) of 20-30 degrees (relative to vertical) is expected to be sufficient.

Fig. 7 shows a top view of the system, where the top and front are open. The sides and the rear part facing toward the tractor are closed. In one embodiment, the pallet forks are constructed in connection with an A-frame. By means of the hydraulic top rod the pallet frame 2 is tilted towards the tractor.

### List of reference numerals

- 1: Main frame
- 2: Pallet forks with frame
- 3: Engine and steering
- 4: Foil roll
- 5: Crane arm
- 5': Crane extension arm
- 6: Tractor
- 7: Joint
- 8: Hydraulic top rod
- 9: Drawbar for pallet frame
- 10: Pallet frame lock
- 11: Gripping arm
- 12: Lifting arm
- 13: Control handle
- 14: Pipe lock
- 16: Actuator
- 17: Side panel
- 18: Spring
- 19: Wire
- 20: A-frame
- 21: Actuator for pipe lock
- 22: Direction of travel

## Claims

1. Method for transporting and placing foil rolls (4) on foil wrapping machine, preferably intended for wrapping agricultural crops, wherein a number of foil rolls (4) are arranged, preferably with a vertical orientation, on a pallet, and where the foil wrapping machine is pulled by a vehicle (6), preferably a tractor (6), **characterised in that** the method comprises the following steps:
- placing the pallet on a structure (2) forming part of a system that is rear-mounted or front-mounted on a vehicle (6), which vehicle (6) is either the vehicle (6) towing the foil wrapping machine or a separate vehicle (6), wherein the system comprises a crane for handling the foil rolls (4), which crane may be mounted on the vehicle 6) or the foil wrapping machine,
- transporting the foil rolls (4) to a place of use, preferably a field;
- lowering the system at the end of the field or carrying the during work and lowering the system each time foil rolls (4) need to be replaced in the foil wrapping machine,
- when replacing a foil roll (4), any empty foil roll cores are removed from the foil roll holder of the foil wrapping machine to enable the placement of a new foil roll (4) in the foil roll holder,
- activating the crane from a rest position to an engaging position for placing a holding device (11) or a gripping device (14) mounted on a crane arm (5) in contact with a foil roll (4) on the pallet,
- activating the holding device (11) or the gripping device (14) for holding the foil roll (4),
- activating the crane arm (5) to bring the foil roll (4) held therein into position for placement in the foil wrapping machine,
- placing the foil roll (4) in the foil roll holder in the foil wrapping machine either by rotation of the holding device (11) of the gripping device (14) or by vertical displacement depending on the orientation of the foil roll holder relative to the foil roll orientation on the pallet,
- releasing the holding device (11) or the gripping device (14) from the foil roll (4) and
- returning the crane arm (5) to the rest position, after which the above-mentioned method steps can be repeated during the next foil roll (4) replacement, wherein the next foil roll (4) is transferred from the pallet to the foil roll holder.

2. System for transporting and placing foil rolls (4) on a foil wrapping machine, preferably intended for wrapping agricultural crops, **characterised in that** the system is configured for use where a number of foil rolls (4) are arranged, preferably with a vertical orientation, on a pallet, and where the foil wrapping machine is pulled by a vehicle (6), preferably a tractor (6) and that the system comprises:
- a main frame (1),
- a pallet frame (2) preferably with pallet forks, for receiving a pallet with foil rolls (4) placed thereon and with a perpendicularly upright frame at the rear of the pallet forks,
- a quick coupler mounted on the main frame, preferably an A-frame (20) rear-mounted or front-mounted on a vehicle, which is either the vehicle towing the foil wrapping machine or a separate vehicle,
- a crane for handling the foil rolls, which crane has a crane arm (5) with a rest position and an engaging position,
- a holding or gripping device (11, 14) mounted on the crane arm (5) and which in the engaging position of the crane arm is in contact with a foil roll (4) on the pallet,
wherein the pallet frame (2) is rotatably mounted on the main frame (1) so that the pallet frame can be tilted backwards during transport and prevent the pallet or rolls from falling off,
wherein the holding or gripping device (11, 14) is arranged for holding and releasing the foil roll (4), and that the holding or gripping device is optionally arranged for rotation and/or displacement for placing the foil roll in the foil roll holder of the foil wrapping machine.

3. System according to claim 2, **characterised in that** the holding device (11) or the gripping device (14) comprises an adjustable gripping arm (11) comprising two crescent-shaped plates and is provided with a closing mechanism that is manually activated or activated by an electric actuator or vacuum.

4. System according to claim 2, **characterised in that** the holding device (11) or the gripping device (14) comprises a pipe lock (14) comprising two obliquely cut pipe halves, wherein an actuator is mounted inside the pipe.

5. System according to claim 4, **characterised in that** the two pipe halves of the pipe lock (14) are configured to be adapted to different diameters of cores in the foil rolls (4) **in that** the pipe lock (14) comprises replaceable pipe halves.

6. System according to any one of claims 2-5, **characterised in that** a lifting arm (12) which connects the holding device (11) or the gripping device (14) to the crane arm (5) extends between the crane arm (5) and the holding device (11) or the gripping device (14).

7. System according to claim 6, **characterised in that** a control handle (13) is placed on the lifting arm (12) in which all functions are controlled.

8. System according to any one of claims 2-7, **characterised in that** the system in several embodiments can be provided with a device which makes it possible to tilt the foil rolls backwards.

9. System according to any one of claims 2-8, **characterised in that** the crane is mounted separately from the pallet forks and the pallet frame (2) and is mounted directly on the foil wrapping machine.

10. System according to any one of claims 2-8, **characterised in that** the crane can optionally be mounted on the vehicle or the foil wrapping machine.
